# EUROPEAN PATENT APPLICATION

(11) **EP 4 631 757 A1**
(43) Date of publication of application: **15.10.2025**
(21) Application number: 24759537.4
(22) Date of filing: 05.02.2024
(51) Int. Cl.: B60K 6/38, B60K 6/36, B60K 6/547, B60K 6/26

(54) **POWER DRIVING SYSTEM FOR NEW ENERGY VEHICLE, AND NEW ENERGY VEHICLE**

(30) Priority: 20.02.2023 CN 202310132832
(71) Applicant: Chongqing Changan Automobile Co., Ltd., Chongqing 400023 (CN)
(72) Inventor: WANG, Yong, Chongqing 400023 (CN); WANG, Yanjun, Chongqing 400023 (CN); ZOU, Peng, Chongqing 400023 (CN)
(74) Representative: Keller Schneider Patent- und Markenanwälte AG
(86) International application number: PCT/CN2024/075914
(87) International publication number: WO 2024/174860

(57) **Abstract**

A power driving system for a new energy vehicle, the power driving system comprising a first electric motor (2), a first clutch (6), a second clutch (7), a first gear set (11), a second gear set (12) and an output shaft (10), wherein the first clutch is arranged between the first electric motor and the first gear set; the second clutch is arranged between the first electric motor and the second gear set; an output gear of the first gear set and an output gear of the second gear set are both connected to a gear train by means of the output shaft; and transmission ratios of the first gear set and the second gear set are different. Further provided is a new energy vehicle comprising the system. Using the system can meet different driving force requirements, so as to enable the first electric motor, the second electric motor and an engine to work in a high-efficiency area, thereby improving the economy and power performance of the vehicle.

## Description

### TECHNICAL FIELD

The present application relates to the technical field of new energy vehicles, in particular to a power drive technology.

### BACKGROUND

Due to mechanical property limitations of engines, it is difficult to continue improving thermal efficiency, which poses a bottleneck in further improving fuel economy. In order to meet the development requirements of high fuel economy and low carbonization in vehicles, traditional vehicles need to be transformed and upgraded into new energy vehicles. Due to the immature development of pure electric vehicles, there are shortcomings of high cost, long charging time, short driving mileage and the like, and promotion limitation is large. Hybrid electric vehicles can make engines be in an optimal fuel economy area through matching of motors and the engines, which improves fuel economy of the entire vehicles. At the same time, the vehicles can travel for a high mileage, and the hybrid electric vehicles become the optimal solution for high fuel economy and low carbonization at present.

The hybrid electric vehicles are driven by using at least two different types of power. Currently, most hybrid electric vehicles adopt petrol-electric hybrid power systems, in order to improve the combustion efficiency of the engines to the maximum degree, hybrid power systems in the prior art all adopt dual-motor structures, two motors are functionally distinguished, that is, it includes a driving motor and an electric generator, the driving motor is only used for driving, the electric generator is only used for electricity generation, the use efficiency of the motors is low, there is only one output gear for the engine and the driving motor, and the working efficiency of the engine and the driving motor cannot be maintained in an efficient area for a long time, resulting in poor power performance and economy of the vehicles. Moreover, some hybrid power systems are complex in design, which increases design complexity.

In the prior art, a hybrid power module system is disclosed, and includes an input shaft, an output shaft, a first rotating shaft, a second rotating shaft, a first motor, a second motor, a first gear pair and a second gear pair, the second motor only generates electricity and cannot provide drive, the motor is not fully utilized, an engine and a driving motor are single-gear driving, and cannot be maintained in the efficient area for a long time, and the power performance and economy of the entire vehicles are poor.

### SUMMARY OF THE INVENTION

A first objective of the present application is to provide a power driving system for a new energy vehicle, so as to solve a problem that a driving motor in the prior art is single-gear driving and cannot be maintained in an efficient area for a long time; and a second objective is to provide a vehicle.

In order to achieve the above objectives, a technical solution adopted by the present application is as follows:
a power driving system for a new energy vehicle includes a first motor, a first clutch, a second clutch, a first gear set, a second gear set and an output shaft. The first clutch is arranged between the first motor and the first gear set, the second clutch is arranged between the first motor and the second gear set, an output gear of the first gear set and an output gear of the second gear set are both connected to a gear train through the output shaft, such that when the first clutch or the second clutch is engaged, the first motor is connected with an input gear of the first gear set or an input gear of the second gear set, a torque output by the first motor can drive the input gear of the first gear set or the input gear of the second gear set to rotate, so as to drive the gear train to rotate through the output shaft, and transmission ratios of the first gear set and the second gear set are different.

According to the above technical means, the first gear set and the second gear set which are different in transmission ratio are arranged, and the above structure enables the torque of the first motor to be transmitted to the gear train only through the first motor or the second motor. Therefore, when the torque output by the first motor is transmitted to the gear train through the first gear set or the second gear set, outputs of two gears may be achieved, and thus the first motor (a driving motor) can be maintained in an efficient area for a long time.

Further, the power driving system for the new energy vehicle also includes an input shaft and an engine, the engine can be connected to the input shaft, and the input shaft is connected with the first clutch and the second clutch through a clutch input hub.

According to the above technical means, by arranging the input shaft, the input shaft can transmit a torque of the engine to the gear train, which achieves a hybrid two-gear drive.

Further, the input shaft is a rotating shaft of a rotor of the first motor.

According to the above technical means, an arrangement space is saved.

Further, one end of the input shaft is connected to the engine, and the other end of the input shaft is connected with a second motor, for transmitting a torque output by the second motor.

According to the above technical means, the second motor is arranged, that is, dual motors are arranged, and thus pure electric and hybrid two-gear drives may be achieved in a case that one of the motors generates electricity.

Further, a third clutch is arranged between the engine and the input shaft, when the third clutch is engaged, the engine is connected with the input shaft, and when the third clutch is disengaged, the engine is not connected with the input shaft.

Further, the first clutch and the second clutch are both installed inside an outer shell of the first motor.

According to the above technical means, the arrangement space is saved.

Further, the first clutch and the second clutch are arranged parallelly and coaxially in an axial direction of the input shaft.

Further, the first gear set includes a first driving gear and a first driven gear which are engaged with each other, the first driving gear and the first driven gear are an input gear and an output gear respectively, the number of teeth of the first driving gear is smaller than the number of teeth of the first driven gear, and the first driving gear is rotatably arranged on the input shaft.

Further, the second gear set includes a second driving gear and a second driven gear which are engaged with each other, the second driving gear and the second driven gear are an input gear and an output gear respectively, the number of teeth of the second driving gear is smaller than the number of teeth of the second driven gear, and the second driving gear is rotatably arranged on the input shaft.

According to the above technical means, a power output path is simplified, and a structure is simpler and more compact, which is conducive to reducing capacity transmission loss and miniaturizing a hybrid power driving system.

A new energy vehicle is characterized by including the above system.

The present application has the beneficial effects:
by controlling the engagement and disengagement of the first clutch and the second clutch, the power of the first motor, the second motor and the engine can be selectively transmitted to the output shaft through one of the first gear set and the second gear set, so that the first motor can output at two speed ratios, achieving two-gear speed change of the first motor, the second motor and the engine, which can meet different driving power requirements, so that the first motor, the second motor and the engine can work in the efficient area, so as to improve the economy and power performance of vehicles.

### BRIEF DESCRIPTION OF THE DRAWINGS

FIG. 1 is a schematic structural diagram of Embodiment 1.
FIG. 2 is a schematic structural diagram of Embodiment 2.
FIG. 3 is a schematic structural diagram of Embodiment 3.

1-Engine; 2-First motor; 3-Second motor; 4-Shock absorber; 5-Third clutch; 6-First clutch; 7-Second clutch; 8-Clutch input hub; 9-Input shaft; 10-Output shaft; 11-First gear set; 111-First driving gear; 112-First driven gear; 12-Second gear set; 121-Second driving gear; 122-Second driven gear; 13-Main reduction gear set; 131-Third driving gear; 132-Third driven gear; and 14-Differential mechanism.

### DETAILED DESCRIPTION

Implementations of technical solutions of the present application will be described below with reference to accompanying drawings and preferred embodiments. Those skilled in the art can easily understand other advantages and effects of the present application from the contents disclosed in this specification. The present application may further be implemented or applied through other different specific implementations, and the details in this specification may also be modified or changed based on different opinions and applications without departing from the spirit of the present application. It should be understood that the preferred embodiments are only intended to explain the present application and not to limit the protection scope of the present application.

It needs to be noted that figures provided in the following embodiments only illustrate the basic concept of the present application in a schematic manner. Therefore, the figures only display components related to the present application and are not drawn based on number, shapes and sizes of the components in actual implementation. The type, quantity and scale of each component in actual implementation may be arbitrarily changed, and the component layout type may also be more complex.

### Embodiment 1

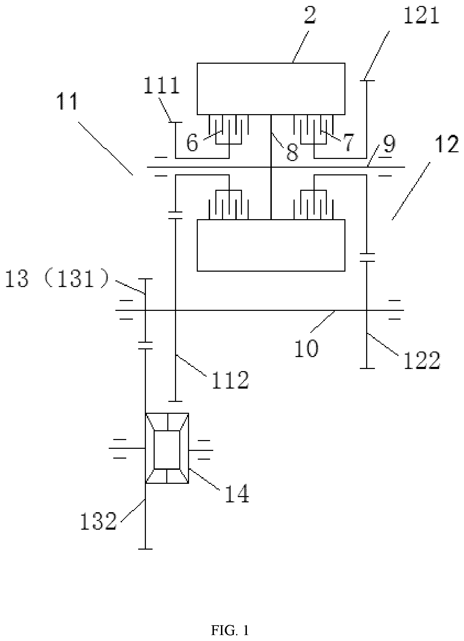

As shown in FIG. 1, a hybrid power driving system provided in this embodiment includes a first motor 2, a first clutch 6, a second clutch 7, an input shaft 9, an output shaft 10, a first gear set 11 and a second gear set 12. The first motor 2 is connected with the first gear set 11 and the second gear set 12 respectively through the first clutch 6 and the second clutch 7. The first gear set 11 and the second gear set 12 are connected with the output shaft 10 respectively, and the output shaft 10 is connected with a differential mechanism 14 through a main reduction gear set 13. The first clutch 6 and the second clutch 7 are fixedly arranged in a cavity of the first motor 2, and the first clutch 6 and the second clutch 7 are connected with the input shaft 9 through a clutch input hub 8. The first gear set 11 and the second gear set 12 correspond to two transmission ratios, so as to achieve different speed ratios.

Specifically, the first gear set 11 includes a first driving gear 111 and a first driven gear 112 which are engaged with each other and are an input gear and an output gear of the first gear set 11 respectively. The second gear set 12 includes a second driving gear 121 and a second driven gear 122 which are engaged with each other and are an input gear and an output gear of the second gear set 12 respectively.

By controlling the engagement and disengagement of the first clutch 6 and the second clutch 7, the power of the first motor 2 can be selectively transmitted to the output shaft 10 through one of the first gear set 11 and the second gear set 12, so that the first motor 2 can output at two speed ratios, achieving two-gear speed change of the first motor 2, which can meet different driving power requirements and make the first motor 2 work in an efficient area as much as possible, so as to improve the economy and power performance of an entire vehicle; and the hybrid power driving system has a simple and compact structure and a small number of components used, which reduces the structure complexity of the hybrid power driving system.

In addition, referring to FIG. 1, the hybrid power driving system further includes a main reduction gear set 13 and a differential mechanism 14, the main reduction gear set 13 is connected to an output end of the output shaft 10, and the differential mechanism 14 is connected between the main reduction gear set 13 and a gear train of the entire vehicle, so as to transmit power of the output shaft 10 to the gear train through the main reduction gear set 13 and the differential mechanism 14 to drive the vehicle to travel.

The first gear set 11 includes a first driving gear 111 arranged on the input shaft 9 and a first driven gear 112 arranged on the output shaft 10, and the first driving gear 111 is engaged with the first driven gear 112. The second gear set 12 includes a second driving gear 121 arranged on the input shaft 9 and a second driven gear 122 arranged on the output shaft 10, and the second driving gear 121 is engaged with the second driven gear 122. The input shaft 9 may be a rotating shaft of a rotor of the first motor 2.

The number of teeth of the first driving gear 111 is smaller than the number of teeth of the first driven gear 112, and the number of teeth of the second driving gear 121 is greater than the number of teeth of the second driven gear 122. A power output path is simplified, and a structure is simpler and more compact, which is conducive to reducing capacity transmission loss and miniaturizing the hybrid power driving system.

The first clutch 6 and the second clutch 7 are integrated dual clutches and are each of an integrated dual-clutch structure. The first driving gear 111 and the second driving gear 121 are hollow gears, and the first driving gear 111 and the second driving gear 121 are rotatably arranged on the input shaft 9. The first clutch 6 and the second clutch 7 are arranged parallelly and coaxially in an axial direction of the input shaft 9. The structure is simpler and more compact, which is conducive to miniaturizing the hybrid power driving system.

By controlling the engagement or disengagement of the first clutch 6 and the second clutch 7, the hybrid power driving system provided by the first embodiment has two pure electric driving modes, including a first pure electric driving mode and a second pure electric driving mode, and each driving mode is described briefly as follows.

### (1) First pure electric driving mode

The first clutch 6 is engaged, the second clutch 7 is disengaged, and the first motor 2 performs driving to establish the first pure electric driving mode. Referring to FIG. 1, a power transmission path in this driving mode is: the first motor 2→the first clutch 6-the first gear set 11→the output shaft 10→the main reduction gear set 13→the differential mechanism 14, and finally power is transmitted to the gear train.

### (2) Second pure electric driving mode

The second clutch 7 is engaged, the first clutch 6 is disengaged, and the first motor 2 performs driving to establish the second pure electric driving mode.

A power transmission path in this driving mode is: the first motor 2→the second clutch 7-the second gear set 12-the output shaft 10→the main reduction gear set 13-the differential mechanism 14, and finally the power is transmitted to the gear train.

### Embodiment 2

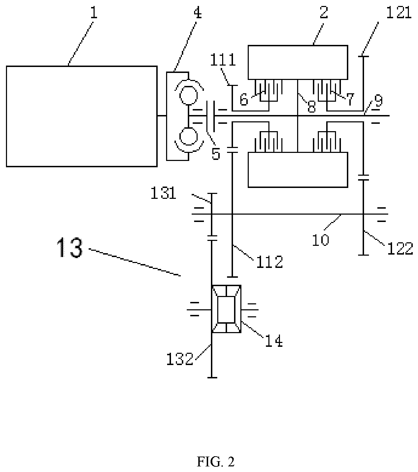

As shown in FIG. 2, an engine 1, a shock absorber 4 and a third clutch 5 are additionally arranged in this embodiment based on Embodiment 1, the engine 1 is connected with an input shaft 9 through the shock absorber 4 and the third clutch 5, and the input shaft 9 is connected with an output end of a first motor 2 through a clutch input hub 8. Other structures of Embodiment 2 are the same as those of Embodiment 1, which will not be repeated here.

The first motor 2 may be used for electricity generation or driving. By controlling the engagement or disengagement of a first clutch 6, a second clutch 7 and the third clutch 5, a pure electric driving mode, a series driving mode, a parallel driving mode and an engine direct driving mode can be implemented, a plurality of the driving modes have two gears, which can meet different driving requirements of a vehicle, making the engine 1 work in a range with high fuel economy and the first motor 2 work in an efficient area as much as possible, so as to improve the economy of the vehicle. The engine 1 and the first motor 2 of the hybrid power driving system share one group of two-gear speed change structures, which may implement multiple driving modes, an integration level is high, a structure is compact, the number of components used is small, structure complexity of the hybrid power driving system is reduced, and meanwhile system efficiency is improved.

Embodiment 2 provides a plurality of driving modes, including a first pure electric driving mode, a second pure electric driving mode, a first parallel driving mode, a second parallel driving mode, an engine direct driving mode, a second engine direct driving mode, a third engine direct driving mode, and a fourth engine direct driving mode. The first pure electric driving mode and the second pure electric driving mode are the same as those of Embodiment 1, which will not be repeated here.

### (1) First parallel driving mode

The third clutch 5 and the first clutch 6 are engaged, the second clutch 7 is disengaged, the engine 1 works, and the first motor 2 performs driving to establish the first parallel driving mode.

A power transmission path 1 in this driving mode is: the first motor 2→the first clutch 6→a first gear set 11→an output shaft 10→a main reduction gear set 13-a differential mechanism 14, and finally power is transmitted to a gear train.

A power transmission path 2 in this driving mode is: the engine 1→the shock absorber 4-the third clutch 5→the input shaft 9-the clutch input hub 8-the first clutch 6-the first gear set 11-the output shaft 10→the main reduction gear set 13-the differential mechanism 14, and finally the power is transmitted to the gear train.

### (2) Second parallel driving mode

The third clutch 5 and the second clutch 7 are engaged, the first clutch 6 is disengaged, the engine 1 works, and the first motor 2 performs driving to establish the second parallel driving mode.

A power transmission path 1 in this driving mode is: the first motor 2→the second clutch 7→a second gear set 12-the output shaft 10→the main reduction gear set 13-the differential mechanism 14, and finally the power is transmitted to the gear train.

A power transmission path 2 in this driving mode is: the engine 1→the shock absorber 4-the third clutch 5→the input shaft 9-the clutch input hub 8-the second clutch 7-the second gear set 12-the output shaft 10→the main reduction gear set 13-the differential mechanism 14, and finally the power is transmitted to the gear train.

### (3) Engine direct driving mode

The third clutch 5 and the first clutch 6 are engaged, the second clutch 7 is disengaged, the engine 1 works, and the first motor 2 generates electricity to establish the engine direct driving mode.

A power transmission path in this driving mode is: the engine 1→the shock absorber 4-the third clutch 5→the input shaft 9-the clutch input hub 8-the first clutch 6-the first gear set 11-the output shaft 10→the main reduction gear set 13-the differential mechanism 14, and finally the power is transmitted to the gear train.

### (4) Second engine direct driving mode

The third clutch 5 and the second clutch 7 are engaged, the first clutch 6 is disengaged, the engine 1 works, and the first motor 2 generates electricity to establish the second engine direct driving mode.

A power transmission path in this driving mode is: the engine 1→the shock absorber 4-the third clutch 5→the input shaft 9-the clutch input hub 8-the second clutch 7-the second gear set 12-the output shaft 10→the main reduction gear set 13-the differential mechanism 14, and finally the power is transmitted to the gear train.

### (5) Third engine direct driving mode

The third clutch 5 and the first clutch 6 are engaged, the second clutch 7 is disengaged, the engine 1 works, and the first motor 2 does not work to establish the third engine direct driving mode.

A power transmission path in this driving mode is: the engine 1→the shock absorber 4-the third clutch 5→the input shaft 9-the clutch input hub 8-the first clutch 6-the first gear set 11-the output shaft 10→the main reduction gear set 13-the differential mechanism 14, and finally the power is transmitted to the gear train.

### (6) Fourth engine direct driving mode

The third clutch 5 and the second clutch 7 are engaged, the first clutch 6 is disengaged, the engine 1 works, and the first motor 2 does not work to establish the fourth engine direct driving mode.

A power transmission path in this driving mode is: the engine 1→the shock absorber 4-the third clutch 5→the input shaft 9-the clutch input hub 8-the second clutch 7-the second gear set 12-the output shaft 10→the main reduction gear set 13-the differential mechanism 14, and finally the power is transmitted to the gear train.

### Embodiment 3

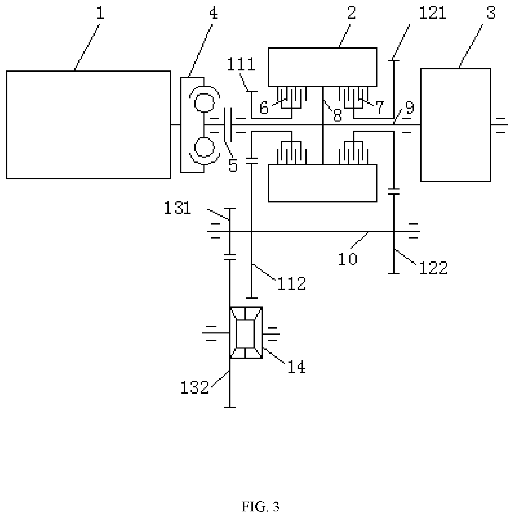

As shown in FIG. 3, a second motor 3 is additionally added in this embodiment based on the second embodiment, the second motor 3 is connected with an input shaft 9, and other structures of this embodiment are the same as those of Embodiment 2, which will not be repeated here.

A first motor 2 and the second motor 3 may be used for electricity generation or driving. By controlling the engagement or disengagement of a first clutch 6, a second clutch 7 and a third clutch 5, a pure electric driving mode, a series driving mode, a parallel driving mode and an engine direct driving mode can be implemented, a plurality of the driving modes have two gears, which can meet different driving requirements of a vehicle, making the engine 1 work in a range with high fuel economy, and the first motor 2 and the second motor 3 work in an efficient area as much as possible, so as to improve the economy of the vehicle. The engine 1, the first motor 2 and the second motor 3 of the hybrid power driving system share one group of two-gear speed change structures, which may implement multiple driving modes, an integration level is high, a structure is compact, the number of components used is small, structure complexity of the hybrid power driving system is reduced, and meanwhile system efficiency is improved.

When the first motor 2 and the engine 1 work, the input shaft 9 may be driven to rotate, so as to achieve electricity generation of the second motor 3. Similarly, when the engine 1 works, the first motor 2 and the second motor 3 can also be driven to enter an electricity generation mode.

Embodiment 3 provides multiple driving modes, including a first pure electric driving mode, a second pure electric driving mode, a third pure electric driving mode, a fourth pure electric driving mode, a fifth pure electric driving mode, a sixth pure electric driving mode, a first series driving mode, a second series driving mode, a first parallel driving mode, a second parallel driving mode, a third parallel driving mode, a fourth parallel driving mode, an engine direct driving mode, a second engine direct driving mode, a third engine direct driving mode, and a fourth engine direct driving mode.

### (1) First pure electric driving mode

The first clutch 6 is engaged, the second clutch 7 and the third clutch 5 are disengaged, the engine 1 does not work, the first motor 2 performs driving, and the second motor 3 does not work to establish the first pure electric driving mode.

A power transmission path in this driving mode is: the first motor 2→the first clutch 6→a first gear set 11→an output shaft 10→a main reduction gear set 13-a differential mechanism 14, and finally power is transmitted to a gear train.

### (2) Second pure electric driving mode

The second clutch 7 is engaged, the first clutch 6 and the third clutch 5 are disengaged, the engine 1 does not work, the first motor 2 performs driving, and the second motor 3 does not work to establish the second pure electric driving mode.

A power transmission path in this driving mode is: the first motor 2→the second clutch 7→a second gear set 12-the output shaft 10→the main reduction gear set 13-the differential mechanism 14, and finally the power is transmitted to the gear train.

### (3) Third pure electric driving mode

The first clutch 6 is engaged, the second clutch 7 and the third clutch 5 are disengaged, the engine 1 does not work, the first motor 2 does not work, and the second motor 3 performs driving to establish the third pure electric driving mode.

A power transmission path in this driving mode is: the second motor 3-the input shaft 9→a clutch input hub 8-the first clutch 6-the first gear set 11→the output shaft 10→the main reduction gear set 13-the differential mechanism 14, and finally the power is transmitted to the gear train.

### (4) Fourth pure electric driving mode

The second clutch 7 is engaged, the first clutch 6 and the third clutch 5 are disengaged, the engine 1 does not work, the first motor 2 does not work, and the second motor 3 performs driving to establish the fourth pure electric driving mode.

A power transmission path in this driving mode is: the second motor 3-the input shaft 9-the clutch input hub 8-the second clutch 7-the second gear set 12-the output shaft 10→the main reduction gear set 13-the differential mechanism 14, and finally the power is transmitted to the gear train.

### (5) Fifth pure electric driving mode

The first clutch 6 is engaged, the second clutch 7 and the third clutch 5 are disengaged, the engine 1 does not work, the first motor 2 performs driving, and the second motor 3 performs driving to establish the fifth pure electric driving mode.

A power transmission path in this driving mode is: the first motor 2→the first clutch 6-the first gear set 11→the output shaft 10→the main reduction gear set 13-the differential mechanism 14, and finally the power is transmitted to the gear train.

A power transmission path in this driving mode is: the second motor 3-the input shaft 9-the clutch input hub 8-the first clutch 6-the first gear set 11→the output shaft 10→the main reduction gear set 13-the differential mechanism 14, and finally the power is transmitted to the gear train.

### (6) Sixth pure electric driving mode

The second clutch 7 is engaged, the first clutch 6 and the third clutch 5 are disengaged, the engine 1 does not work, the first motor 2 performs driving, and the second motor 3 performs driving to establish the sixth pure electric driving mode.

A power transmission path in this driving mode is: the first motor 2→the second clutch 7-the second gear set 12-the output shaft 10→the main reduction gear set 13-the differential mechanism 14, and finally the power is transmitted to the gear train.

A power transmission path in this driving mode is: the second motor 3-the input shaft 9-the clutch input hub 8-the second clutch 7-the second gear set 12-the output shaft 10→the main reduction gear set 13-the differential mechanism 14, and finally the power is transmitted to the gear train.

### (7) First series driving mode

The first clutch 6 is engaged, the second clutch 7 and the third clutch 5 are disengaged, the engine 1 works, the first motor 2 performs driving, and the second motor 3 generates electricity to establish the first series driving mode.

A power transmission path in this driving mode is: the first motor 2→the first clutch 6-the first gear set 11→the output shaft 10→the main reduction gear set 13-the differential mechanism 14, and finally the power is transmitted to the gear train.

### (8) Second series driving mode

The second clutch 7 is engaged, the first clutch 6 and the third clutch 5 are disengaged, the engine 1 works, the first motor 2 performs driving, and the second motor 3 generates electricity to establish the second series driving mode.

A power transmission path in this driving mode is: the first motor 2→the second clutch 7-the second gear set 12-the output shaft 10→the main reduction gear set 13-the differential mechanism 14, and finally the power is transmitted to the gear train.

### (9) First parallel driving mode

The first clutch 6 and the third clutch 5 are engaged, the second clutch 7 is disengaged, the engine 1 works, the first motor 2 performs driving, and the second motor 3 does not work to establish the first parallel driving mode.

A power transmission path 1 in this driving mode is: the first motor 2→the first clutch 6-the first gear set 11→the output shaft 10→the main reduction gear set 13-the differential mechanism 14, and finally the power is transmitted to the gear train.

A power transmission path 2 in this driving mode is: the engine 1→the shock absorber 4-the third clutch 5→the input shaft 9-the clutch input hub 8-the first clutch 6-the first gear set 11-the output shaft 10→the main reduction gear set 13-the differential mechanism 14, and finally the power is transmitted to the gear train.

### (10) Second parallel driving mode

The second clutch 7 and the third clutch 5 are engaged, the first clutch 6 is disengaged, the engine 1 works, the first motor 2 performs driving, and the second motor 3 does not work to establish the second parallel driving mode.

A power transmission path in this driving mode is: the first motor 2→the second clutch 7-the second gear set 12-the output shaft 10→the main reduction gear set 13-the differential mechanism 14, and finally the power is transmitted to the gear train.

A power transmission path 2 in this driving mode is: the engine 1→the shock absorber 4-the third clutch 5→the input shaft 9-the clutch input hub 8-the second clutch 7-the second gear set 12-the output shaft 10→the main reduction gear set 13-the differential mechanism 14, and finally the power is transmitted to the gear train.

### (11) Third parallel driving mode

The first clutch 6 and the third clutch 5 are engaged, the second clutch 7 is disengaged, the engine 1 works, the first motor 2 does not work, and the second motor 3 performs driving to establish the third parallel driving mode.

A power transmission path in this driving mode is: the second motor 3-the input shaft 9-the clutch input hub 8-the first clutch 6-the first gear set 11→the output shaft 10→the main reduction gear set 13-the differential mechanism 14, and finally the power is transmitted to the gear train.

A power transmission path 2 in this driving mode is: the engine 1→the shock absorber 4-the third clutch 5→the input shaft 9-the clutch input hub 8-the first clutch 6-the first gear set 11-the output shaft 10→the main reduction gear set 13-the differential mechanism 14, and finally the power is transmitted to the gear train.

### (12) Fourth parallel driving mode

The second clutch 7 and the third clutch 5 are engaged, the first clutch 6 is disengaged, the engine 1 works, the first motor 2 does not work, and the second motor 3 performs driving to establish the fourth parallel driving mode.

A power transmission path in this driving mode is: the second motor 3-the input shaft 9-the clutch input hub 8-the second clutch 7-the second gear set 12-the output shaft 10→the main reduction gear set 13-the differential mechanism 14, and finally the power is transmitted to the gear train.

A power transmission path 2 in this driving mode is: the engine 1→the shock absorber 4-the third clutch 5→the input shaft 9-the clutch input hub 8-the second clutch 7-the second gear set 12-the output shaft 10→the main reduction gear set 13-the differential mechanism 14, and finally the power is transmitted to the gear train.

### (13) Fifth parallel driving mode

The first clutch 6 and the third clutch 5 are engaged, the second clutch 7 is disengaged, the engine 1 works, the first motor 2 performs driving, and the second motor 3 performs driving to establish the fifth parallel driving mode.

A power transmission path 1 in this driving mode is: the first motor 2→the first clutch 6-the first gear set 11→the output shaft 10→the main reduction gear set 13-the differential mechanism 14, and finally the power is transmitted to the gear train.

A power transmission path 2 in this driving mode is: the second motor 3-the input shaft 9-the clutch input hub 8-the first clutch 6-the first gear set 11→the output shaft 10→the main reduction gear set 13-the differential mechanism 14, and finally the power is transmitted to the gear train.

A power transmission path 3 in this driving mode is: the engine 1→the shock absorber 4-the third clutch 5→the input shaft 9-the clutch input hub 8-the first clutch 6-the first gear set 11-the output shaft 10→the main reduction gear set 13-the differential mechanism 14, and finally the power is transmitted to the gear train.

### (14) Sixth parallel driving mode

The second clutch 7 and the third clutch 5 are engaged, the first clutch 6 is disengaged, the engine 1 works, the first motor 2 performs driving, and the second motor 3 performs driving to establish the sixth parallel driving mode.

A power transmission path 1 in this driving mode is: the first motor 2→the second clutch 7-the second gear set 12-the output shaft 10→the main reduction gear set 13-the differential mechanism 14, and finally the power is transmitted to the gear train.

A power transmission path 2 in this driving mode is: the second motor 3-the input shaft 9-the clutch input hub 8-the second clutch 7-the second gear set 12-the output shaft 10→the main reduction gear set 13-the differential mechanism 14, and finally the power is transmitted to the gear train.

A power transmission path 3 in this driving mode is: the engine 1→the shock absorber 4-the third clutch 5→the input shaft 9-the clutch input hub 8-the second clutch 7-the second gear set 12-the output shaft 10→the main reduction gear set 13-the differential mechanism 14, and finally the power is transmitted to the gear train.

### (15) Engine direct driving mode

The first clutch 6 and the third clutch 5 are engaged, the second clutch 7 is disengaged, the engine 1 works, the first motor 2 generates electricity, and the second motor 3 does not work to establish the engine direct driving mode. A power transmission path 3 in this driving mode is: the engine 1→the shock absorber 4-the third clutch 5→the input shaft 9-the clutch input hub 8-the first clutch 6-the first gear set 11→the output shaft 10→the main reduction gear set 13-the differential mechanism 14, and finally the power is transmitted to the gear train.

### (16) Second engine direct driving mode

The second clutch 7 and the third clutch 5 are engaged, the first clutch 6 is disengaged, the engine 1 works, the first motor 2 generates electricity, and the second motor 3 does not work to establish the second engine direct driving mode.

A power transmission path 3 in this driving mode is: the engine 1→the shock absorber 4-the third clutch 5→the input shaft 9-the clutch input hub 8-the second clutch 7-the second gear set 12-the output shaft 10→the main reduction gear set 13-the differential mechanism 14, and finally the power is transmitted to the gear train.

### (17) Third engine direct driving mode

The first clutch 6 and the third clutch 5 are engaged, the second clutch 7 is disengaged, the engine 1 works, the first motor 2 does not work, and the second motor 3 generates electricity to establish the third engine direct driving mode.

A power transmission path 3 in this driving mode is: the engine 1→the shock absorber 4-the third clutch 5→the input shaft 9-the clutch input hub 8-the first clutch 6-the first gear set 11-the output shaft 10→the main reduction gear set 13-the differential mechanism 14, and finally the power is transmitted to the gear train.

### (18) Fourth engine direct driving mode

The second clutch 7 and the third clutch 5 are engaged, the first clutch 6 is disengaged, the engine 1 works, the first motor 2 does not work, and the second motor 3 generates electricity to establish the fourth engine direct driving mode.

A power transmission path 3 in this driving mode is: the engine 1→the shock absorber 4-the third clutch 5→the input shaft 9-the clutch input hub 8-the second clutch 7-the second gear set 12-the output shaft 10→the main reduction gear set 13-the differential mechanism 14, and finally the power is transmitted to the gear train.

The above embodiments are only preferred embodiments provided to fully illustrate the present application, and the protection scope of the present application is not limited to these. Any equivalent substitution or transformation made by those skilled in the art based on the present application is within the protection scope of the present application.

## Claims

1. A power driving system for a new energy vehicle, **characterized in** comprising a first motor (2), a first clutch (6), a second clutch (7), a first gear set (11), a second gear set (12) and an output shaft (10), wherein the first clutch (6) is arranged between the first motor (2) and the first gear set (11), the second clutch (7) is arranged between the first motor (2) and the second gear set (12), an output gear of the first gear set (11) and an output gear of the second gear set (12) are both connected to a gear train through the output shaft (10), such that when the first clutch (6) or the second clutch (7) is engaged, the first motor (2) is connected to an input gear of the first gear set (11) or an input gear of the second gear set (12), a torque output by the first motor (2) is capable of driving the input gear of the first gear set (11) or the input gear of the second gear set (12) to rotate, so as to drive the gear train to rotate through the output shaft (10), and transmission ratios of the first gear set (11) and the second gear set (12) are different.

2. The system according to claim 1, **characterized in** further comprising an input shaft (9) and an engine (1), wherein the engine (1) is capable of being connected to the input shaft (9), and the input shaft (9) is connected to the first clutch (6) and the second clutch (7) through a clutch input hub (8).

3. The system according to claim 2, **characterized in that** the input shaft (9) is a rotating shaft of a rotor of the first motor (2).

4. The system according to claim 3, **characterized in that** one end of the input shaft (9) is connected to the engine (1), and the other end of the input shaft (9) is connected to a second motor (3), for transmitting a torque output by the second motor (3).

5. The system according to claim 4, **characterized in that** a third clutch (5) is arranged between the engine (1) and the input shaft (9), when the third clutch (5) is engaged, the engine (1) is connected with the input shaft (9), and when the third clutch (5) is disengaged, the engine (1) is not connected with the input shaft (9).

6. The system according to claim 1, **characterized in that** the first clutch (6) and the second clutch (7) are both installed inside an outer shell of the first motor (2).

7. The system according to claim 6, **characterized in that** the first clutch (6) and the second clutch (7) are arranged parallelly and coaxially in an axial direction of the input shaft (9).

8. The system according to claim 2, **characterized in that** the first gear set (11) comprises a first driving gear (111) and a first driven gear (112) which are engaged with each other, the first driving gear (111) and the first driven gear (112) are an input gear and an output gear respectively, the number of teeth of the first driving gear (111) is smaller than the number of teeth of the first driven gear (112), and the first driving gear (111) is rotatably arranged on the input shaft (9).

9. The system according to claim 2, **characterized in that** the second gear set (12) comprises a second driving gear (121) and a second driven gear (122) which are engaged with each other, the second driving gear (121) and the second driven gear (122) are an input gear and an output gear respectively, the number of teeth of the second driving gear (121) is smaller than the number of teeth of the second driven gear (122), and the second driving gear (112) is rotatably arranged on the input shaft (9).

10. A new energy vehicle, **characterized in** comprising the system according to any one of claims 1 to 9.
